# EUROPEAN PATENT SPECIFICATION

(11) **EP 2 213 069 B1**
(45) Date of publication and mention of the grant of the patent: **01.08.2012**
(21) Application number: 07821603.3
(22) Date of filing: 19.10.2007
(51) Int. Cl.: H04L 29/06

(54) **ESTABLISHING A MULTIMEDIA COMMUNICATIONS SESSION**
HERSTELLEN EINER MULTIMEDIA-KOMMUNIKATIONSSITZUNG
ETABLISSEMENT D'UNE SESSION DE COMMUNICATION MULTIMÉDIA

(43) Date of publication of application: 04.08.2010
(73) Proprietor: Telefonaktiebolaget LM Ericsson (publ), 164 83 Stockholm (SE)
(72) Inventor: PRZYBYSZ, Hubert, S-126 37 Hägersten (SE); CASTELLANOS, David, E-28045 Madrid (ES)
(74) Representative: Lind, Robert
(86) International application number: PCT/EP2007/061239
(87) International publication number: WO 2009/049685

(56) References cited:
- US-A1- 2007 127 451
- "Digital cellular telecommunications system (Phase 2+); Universal Mobile Telecommunications System (UMTS); IP Multimedia Subsystem (IMS); Stage 2 (3GPP TS 23.228 version 7.9.0 Release 7); ETSI TS 123 228" ETSI STANDARDS, LIS, SOPHIA ANTIPOLIS CEDEX, FRANCE, vol. 3-SA2, no. V7.9.0, 1 October 2007 (2007-10-01), XP014039886 ISSN: 0000-0001 cited in the application

## Description

### Technical Field

The present invention relates to a method and apparatus for improving the way in which User Equipment (UE) establishes a multimedia session in an IP Multimedia Subsystem (IMS) network.

### Background

The IP Multimedia Subsystem (IMS) is the technology defined by the Third Generation Partnership Project (3GPP) to provide IP Multimedia services over mobile communication networks. IP Multimedia services provide a dynamic combination of voice, video, messaging, data, etc. within the same session. As the number of basic applications, and the media which it is possible to combine, increases, so will the number of services offered to the end users, giving rise to a new generation of personalised, rich multimedia communication services.

The IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly.

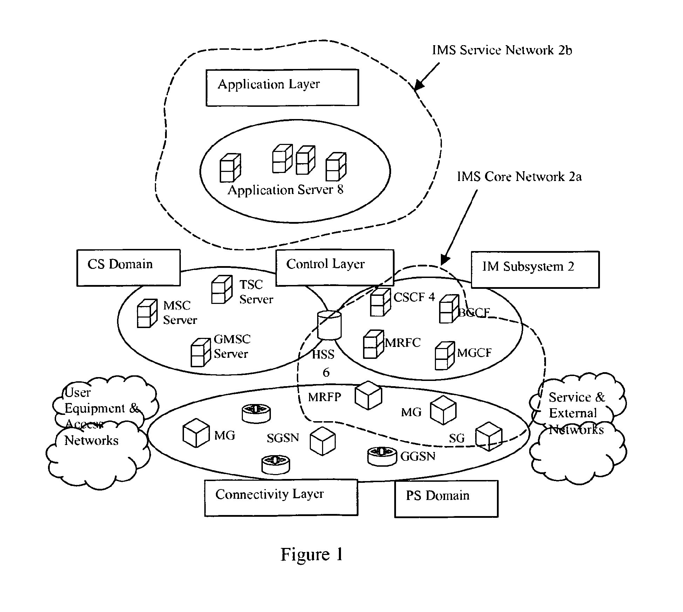

Figure 1 illustrates schematically how the IMS 2 fits into the mobile network architecture in the case of a GPRS/PS access network. The IMS 2 includes a core network 2a and a service network 2b. Call/Session Control Functions (CSCFs) 4 operate as SIP proxies within the IMS 2. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF. In addition the IMS network includes a Home Subscriber Server (HSS) 6. The HSS 6 is the master user database that supports the IMS network entities. It contains subscription-related information and credentials for further authentication and authorisation of users.

A user registers with the IMS using the specified SIP REGISTER method. This is a mechanism for attaching to the IMS and announcing to the IMS the address at which a SIP user identity can be reached. The user receives a unique URI (Uniform Resource Indicator) from the S-CSCF for it to use when it initiates a dialog. In 3GPP, when a SIP terminal performs a registration, the IMS authenticates the user, and allocates an S-CSCF to that user from the set of available S-CSCFs. When a registered user subsequently sends a session request (e.g. SIP INVITE) to the IMS, the request will include the P-CSCF and S-CSCF URIs so that the P-CSCF is able to forward the request to the selected S-CSCF. This applies both on the originating and terminating sides of the IMS (for the terminating call the request will include the P-CSCF address and the UE address).

Within the IMS service network 2b, Application Servers (ASs) 8 are provided for implementing IMS service functionality. Application Servers provide services to end-users in an IMS system, and may be connected either as end-points over the 3GPP defined Mr interface, or "linked in" by an S-CSCF over the 3GPP defined ISC interface. Certain Application Servers will perform actions dependent upon subscriber identities (either the called or calling subscriber, whichever is "owned" by the network controlling the Application Server).

When a subscriber's user equipment (UE), such as a mobile telephone or computer, registered with the IMS, wishes to initiate a multimedia session it sends a session request, which, for example, may be in the form of a SIP INVITE message. Within the session request, the SDP includes details of the type of session requested, which includes the different media (e.g. audio, video etc.) as well as information referred to hereafter as media characteristics that the UE is capable of handling. The media characteristics may include, for example, information about the codec (compression-decompression) procedures that the UE supports as well as the processing rates (kbps) of the codecs.

3GPP technical specification TS 23.228 [1] defines procedures for determining (negotiating) the codec and media characteristics between the endpoints of a multimedia session during the initial session set-up and for making subsequent modifications. These procedures run end-to-end between the two communicating peers although, as defined by 3GPP, the S-CSCF and P-CSCF at either side of the communication path have the ability to influence such negotiation. In the event that any of the S-CSCFs and/or P-CSCFs in the communication path finds that the session request includes media parameters that are not allowed within an IMS session, they shall reject the session initiation attempt.

The S-CSCFs analyse the codec and media characteristics contained within the SDP request to determine if the characteristics are within those allowed for IMS sessions by the user's subscriber profile (for the requested service) in the IMS domain. Thus, a S-CSCF would be able to reject a session initiation attempt when the user's IMS subscription does not allow the use of a particular media type or codec (for a particular IMS Service). The P-CSCFs analyse the codec and media characteristics contained within the SDP request to determine if the characteristics are within those allowed for IMS sessions by the IMS Provider. Thus, a P-CSCF would be able to reject a session initiation attempt when the IMS Provider does not support a particular media type or codec.

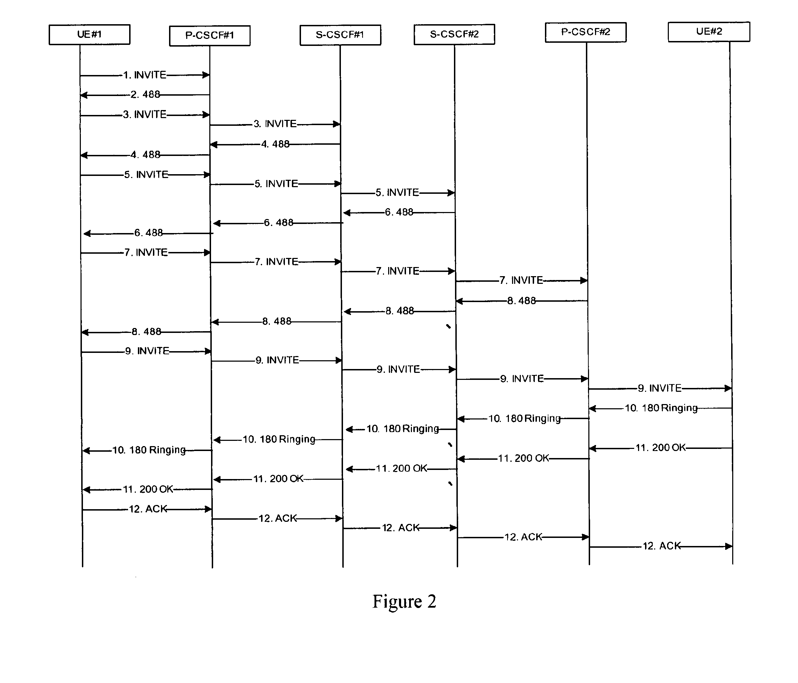

Figure 2 depicts the worst case scenario where the P-CSCFs and S-CSCFs at each side of the communication path find media parameters that are not allowed. As shown each P-CSCF and S-CSCF rejects the session initiation attempt with a SIP 488 Reject response. Each SIP 488 message includes the media characteristics that would be acceptable to the rejecting P-CSCF or S-CSCF. Each time it receives the SIP 488 reject message, the UE uses this information to re-attempt the session initiation.

As UEs become more advanced and increase their capabilities, they will support an increasing number of codecs and media characteristics. The UEs and clients will try to initiate services making use of the highest capabilities they support. As a result there will be an increasing tendency for message flows such as those shown in figure 2 to take place. For example, IMS clients will normally initiate session establishment offering all the codecs they support (unless the user has manually configured each client application otherwise), ignoring any restriction of codec set by the IMS operator.

One effect of the flows shown in figure 2 is that it can lead to a long (probably unacceptable) session set-up time. In addition, the same situation will be experienced in subsequent sessions because the UE is only configured to modify a session request to take account the acceptable session information received with the 488 reject message on a per session basis (i.e. acceptable session characteristics information is not used for subsequent session initiation attempts).

It is an object of the present invention to alleviate the aforementioned problems.

US 2007/127451 A1 addresses provisioning a user interface (menu) at a user terminal which reflects the services to which the user is subscribed. A menu is constructed by a menu server based upon subscription data held within a contents server.

### Summary

According to a first aspect of the present invention there is provided a method of enabling user equipment to establish a communication session over an IMS network, as defined in claim 1. The communication session is enabled by one or more call/session control functions, CSCFs, in the network in accordance with media characteristics that define the network resources to be utilised for the session. The method includes: receiving within the IMS network a subscriber registration request originating from the user equipment and, in response thereto, sending to the user equipment an identification of allowable media characteristics. The method may further comprise storing the identification of allowable media characteristics in a memory in the user equipment.

In embodiments of the invention, the method further comprises sending a session initiation request from the user equipment to the network, wherein the session initiation request includes a specification of media characteristics for the session based on the allowable media characteristics.

In embodiments of the invention, the registration request comprises a SIP REGISTER message. The identification of allowable media characteristics may be sent to the user equipment in a SIP 2000K message.

It is an advantage that the UE is able to learn the allowable media characteristics when it registers and can then use these when it initiates a session. In this way, there will be a reduced number of Reject responses and the session can be established more quickly.

In embodiments of the invention at least one of the call/session control functions is a P-CSCF and the allowable media characteristics include media characteristics based on Access Network policies applied by the P-CSCF.

In embodiments of the invention at least one of the call/session control functions is a S-CSCF and the allowable media characteristics include media characteristics based on Home Network policies applied by the S-CSCF.

The P-CSCF may receive a message from an S-CSCF that includes an indication of the allowable media characteristics based on Home Network policies applied by the S-CSCF and merges these with indications of the media characteristics based on Access Network policies before sending indications of merged allowable media characteristics to the user equipment.

In embodiments of the invention, the method further comprises the step of sending updated allowable media characteristics to the UE in response to a re-registration message sent from the UE to the IMS network. It is an advantage that, when allowable characteristics change, the UE can be updated so that it is kept informed of the latest allowable characteristics.

In embodiments of the invention, the identification of allowable media characteristics is inserted in a document into a message sent to the UE in response to the registration request. The document may be an XML document.

According to a second aspect of the present invention there is provided a network node for performing a proxy call/session control function, PCSCF, in an IMS network, as defined in claim 10. The control function includes implementation of allowable media characteristics that define network resources provided for communications sessions. The device includes: means for sending a message to user equipment in response to a registration request from the user equipment, wherein the message comprises information identifying the allowable media characteristics.

The network node may comprise a P-CSCF having means for receiving a response message indicating allowable media characteristics based on Home Network policies from one or more other network nodes. The P-CSCF is configured to send the message to the UE including information identifying allowable media characteristics based on said Home Network policies and information identifying allowable media characteristics based on Access Network policies.

The P-CSCF may be configured to merge the indications of allowable media characteristics based on Home Network policies and Access Network policies and to send the message to the UE including the merged indications.

According to a third aspect of the present invention there is provided user equipment configured to participate in a communication session over an IMS network, as defined in claim 11. The communication session is enabled by one or more call/session control functions in the network in accordance with media characteristics that define network resources to be utilised for the session. The UE includes: means for sending a registration request to register with the network; means for receiving a message in response to the registration request from the network, wherein the message comprises information identifying allowable media characteristics; and means for applying the allowable media characteristics to subsequent session requests.

The information in the message may comprise a document that includes allowable media characteristics based on Access Network policies, and/or allowable media characteristics based on Home Network policies.

The allowable media characteristics based on Access Network policies and the allowable media characteristics based on Home Network policies may be received in different policy documents, the user equipment comprising means for merging the Access Network and Home Network policies.

The user equipment may further comprise means for storing said information identifying allowable media characteristics.

The user equipment may further comprise means for generating a re-registration request and means for receiving information identifying updated allowable media characteristics in response to the re-registration request.

In embodiments of the invention the message further comprises additional information relating to other types of network policies, the user equipment storing the additional information for use in generating subsequent requests.

### Brief Description of the Drawings

Embodiments of the invention are described below with reference to the drawings, in which:
Figure 1 is a schematic illustration of a GPRS/PS access network showing how the IMS fits into the mobile network architecture.
Figure 2 is an illustration of the signal flows between a UE and network nodes where a call/session request is rejected under existing procedures.
Figure 3 is an illustration of the signal flows between a UE and network nodes for registration and session set up in accordance with an embodiment of the invention.
Figure 4 is an illustration of the signal flows between a UE and network nodes for re-registration and session set up in accordance with an embodiment of the invention.

### Detailed Description

The problems introduced above are further illustrated by way of the following example. Considering only the originating side of the communication path, let us imagine that the P-CSCF holds a policy to run a MTSI (Multimedia Telephone Services for IMS) speech session using the AMR-NB (Adaptive Multi-Rate - Narrow Band) codec at a maximum of 5.9 kbps, and the S-CSCF holds a policy for that particular originating user to run MTSI speech sessions with AMR-NB codec at a maximum of 5 kbps. If the user owns an advanced terminal capable of running MTSI speech calls with multiple codecs including AMR-NB and the UE offers all the codecs supported at every MTSI session initiation attempt, then an MTSI speech call initiation attempt will be rejected:
- firstly by the P-CSCF which will indicate that MTSI speech calls using the AMR-NB codec will only be allowed at a maximum of 5.9 kbps, and
- secondly by the S-CSCF which will indicate that for that user the AMR-NB codec is only supported at 5 kbps.

When the user initiates a new MTSI speech call (again offering all the codecs it supports) this new call will again be rejected twice, as above. One possible solution (see change request CR to 3GPP CTI#45 C1-070034) would be for UEs to be allowed to cache policies received in 488 error responses. The mechanism proposed would provide means for the UE to progressively learn the network's policies from the service rejections received from the IMS network. This would be achieved by means of the introduction of additional information elements within the SIP 488 Reject response. The additional information would include an indication that the acceptable SDP provided comes from either the local P-CSCF or S-CSCF. There would also be an advanced UE that derives restrictions for the negotiation of IMS Session characteristics from the improved SIP 488 Reject messages. The advanced UE would use the derived restrictions for the negotiation of IMS sessions in future session initiation attempts until the UE is re-authenticated within the IMS system.

However, the mechanism suggested above presents some drawbacks. Firstly, it could take two round trips of unsuccessful session initiation attempts for the UE to learn about local P-CSCF and S-CSCF restrictions in the negotiation of session characteristics. Secondly, in order for the UE to be able to update the policy restrictions, especially in the case when these need to be upgraded, it would only cache the information learnt in between re-authentications. This is configurable within IMS, but if executed too often it represents a sub-optimal procedure because the first drawback above will potentially be repeated at each re-authentication even if there are no changes in the restrictions to be updated.

Embodiments of the invention use another approach. In general, the IMS network may have policies that affect the establishment of IMS sessions. These policies may be applied either by the user's home IMS network, or by the network that the user's UE is visiting (in the event that this is not the home network). As explained above, these policies are applied in the CSCF nodes through which the session is being established and may result in the session being rejected. The basic concept of this invention is to allow the UE to obtain such policies pertaining to its visited and home IMS networks at the time the UE registers with the IMS. This provides the UE with the ability to initiate a session establishment request with a high probability of being accepted by the visited and home IMS networks. These policies are sent to the UE as part of the normal registration and re-registration procedures, in a response to the SIP REGISTER message.

Two alternative embodiments are:
1) the policies of the P-CSCF and S-CSCF are merged into one policy in the network prior to being sent to the UE; and
2) the policies of the P-CSCF and S-CSCF are sent to the UE as separate policies and are merged by the UE.

Note that the policies may also take into account potential dynamic conditions in which the UE may find itself, e.g. depending on the type of access it is using.

The mechanism for the UE to learn the network's policies at the time of registration with the IMS includes:
- Downloading to the UE of the policies affecting the establishment of IMS Sessions that are provisioned at the local P-CSCF and S-CSCF in the response to the initial SIP REGISTER procedure.
- Downloading of updates of the policies for the establishment of IMS Sessions that are provisioned at the local P-CSCF and S-CSCF in the response to the subsequent SIP re-REGISTER procedure.
- An advanced UE that uses the knowledge of the policies for the establishment of IMS sessions for all the session initiation attempts.

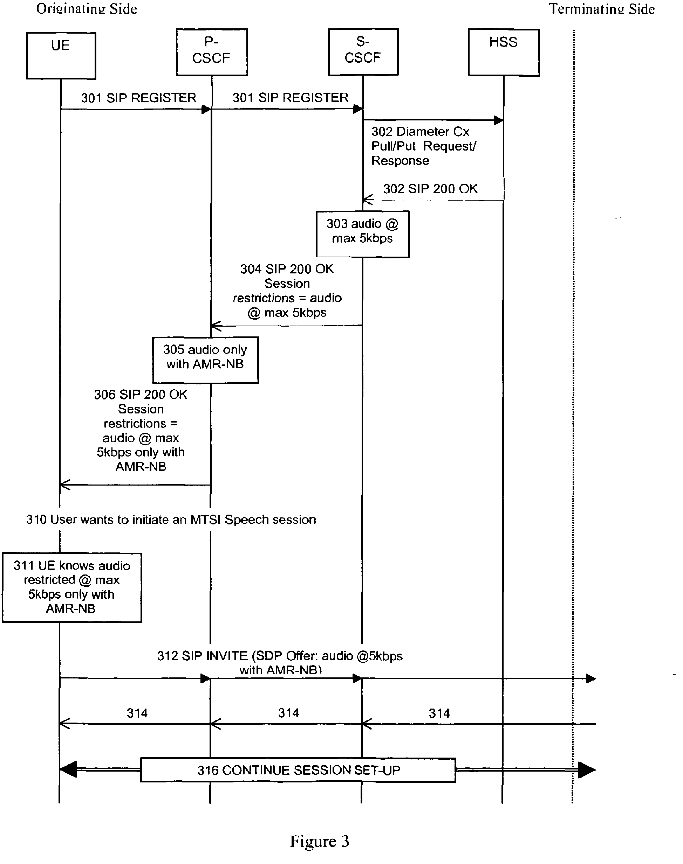

Figure 3 depicts the revised SIP REGISTER method of this invention.

At step 301 the originating UE sends the SIP REGISTER request to the network in the normal manner. This is sent to the P-CSCF, which forwards it to the S-CSCF, from where the S-CSCF further contacts the HSS for user credentials and user profile information (step 302). Typically, authentication of the user will be required, which means that the S-CSCF must obtain the user credentials from the HSS before responding to the SIP REGISTER request with a 2000K message. This involves additional SIP round trips which are not shown here in figure 3 for simplicity.

Once interactions with the HSS are successfully completed, the S-CSCF on the originating side includes policy rules that dictate the characteristics that are allowed for IMS sessions by the user's subscriber profile in the IMS domain. In this case one of the policy rules relating to MTSI speech calls is a limitation of a maximum of 5kbps for audio data. At step 303, the local (originating side) S-CSCF inserts "Home Network" policies within the 2000K(REG) message. These include the policy rule limiting audio data to 5kbps for MTSI speech calls.

At step 304 the SIP 2000K message, with the additional information is forwarded to the P-CSCF. The P-CSCF on the originating side includes policy rules that dictate the characteristics that are allowed for IMS sessions by the IMS Provider. In this case, one of the policy rules restricts MTSI speech calls to use of audio with an AMR-NB codec. At step 305, the local P-CSCF inserts "Access Network" policies within 2000K(REG). These include the policy rule limiting audio for MTSI speech calls to use of the AMR-NB codec.

At step 306 the SIP 2000K message with all the policy rules added by the S-CSCFs and P-CSCFs is received by the UE. Thus, as part of the registration procedure, the UE knows the policies for the establishment of IMS Sessions set at the local P-CSCF and S-CSCF.

At step 310, the user wishes to initiate an MTSI speech session. At step 310, because the UE knows the policy restrictions based on the information received with the SIP 2000K message on registering, the UE can generate a SIP INVITE message that includes the appropriate codec and media characteristics (in this case audio data at 5kbps with the AMR-NB codec). As these characteristics are allowed, the INVITE request will be allowed and the responses 314 will not contain any 488 rejects. At step 316 the session set-up can continue.

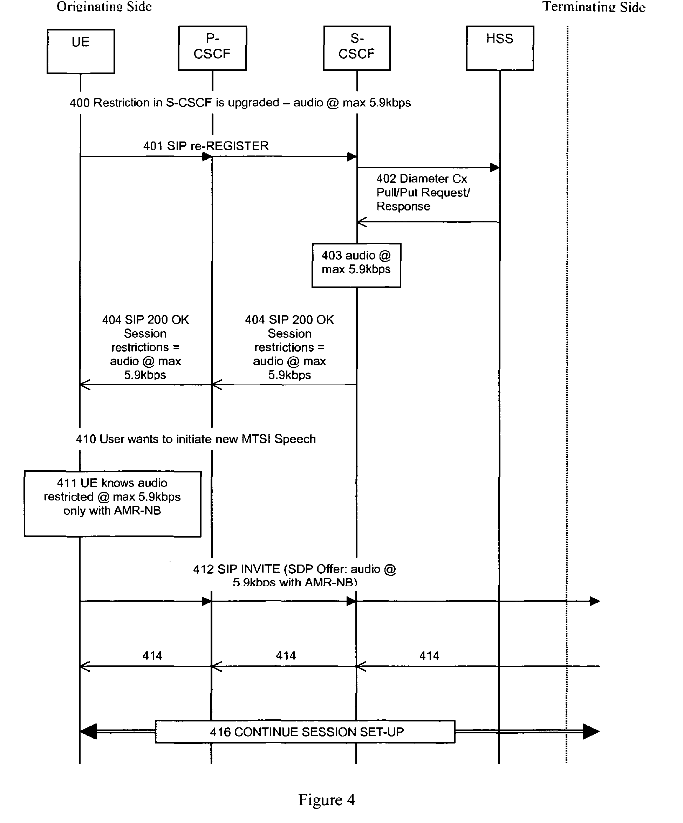

Figure 4 illustrates the signal flows that enable the UE to be notified of updates of policies by means of the Re-REGISTER process. In this example, at step 400 the restriction of the maximum audio data of 5 kbps is upgraded to a maximum of 5.9kbps. This policy change is implemented by the S-CSCF. At step 401, the UE sends a re-REGISTER message to the network. Re-registering of UEs occurs at predetermined periodic intervals, and is used, amongst other things, as a means for the network to reauthenticate the user and make sure the UE is still active.

When, at step 402, the interactions with the HSS are completed, then, at step 403, the S-CSCF inserts the changed policy rule into the SIP 2000K message, as before. This is returned, via the P-CSCF (where no changes to the policy rules implemented by the P-CSCF have occurred in this example). The P-CSCF then forwards the SIP 2000K message to the UE.

At step 410, when the user next wants to initiate a MTSI speech call, the UE, at step 411, knowing the updated restrictions, generates the appropriate SIP INVITE message, which includes an increase in the audio data to 5.9kbps. At step 412 the SIP INVITE is forwarded to the network taking account of the updated policy at the S-CSCF, and as before, no 488 reject messages are returned at step 414. This means that the session set-up is allowed to continue at step 416.

The insertion of policies into the SIP 2000K message may be performed using a policy document, for example an XML document. In embodiment (1), where the policies are merged at the P-CSCF, the P-CSCF selects the applicable Access Network policy rules and merges these with the policy document coming from the S-CSCF (containing the Home Network policy rules), which is contained in the body of the 2000K message sent from the S-CSCF to the P-CSCF (step 304 in Figure 3). Merging the policies involves specifying only the most severe restrictions that apply. In the example of Figure 3, this means that the merged policies would not need to include the restriction of a maximum of 5.9kbps placed on use of the codec AMR-NB by the P-CSCF, because this is not as severe as the 5.0kbps restriction placed by the S-CSCF. The merged policy document is then added to the body of the 2000K message (at step 305) by the P-CSCF and forwarded to the UE (step 306). The UE then stores the merged policies in its memory.

In XML, schemas describe the type of a document, for example the constraints that are placed on the structure and contents of a document of that type. In the present case, the schema of the policy document may be the same as defined in draft-ietf sipping-media-policy-dataset-04. This draft defines a document format for media characteristics of SIP sessions, the Media Policy Dataset Format (MPDF). The MPDF format is based on XML and extends the Schema for SIP User Agent Profile Data Sets by specifying a data set for media characteristics. This format can be used to describe the media characteristics of a given SIP session (e.g. the media types and codecs used) in a session info document based on the session description of a session. The MPDF format can also be used to express policies for SIP sessions in a session policy document. The two types of MPDF documents, session information and session policy documents, share the same set of XML elements to describe session characteristics.

This method may also be used to convey other information to the UE (e.g. other types of policies for the UE).

When the UE initiates a session, it does so by referring to the stored policies in its memory, and offers only session characteristics that comply with the policies. This means that there will be fewer 488 rejections (only those coming from the terminating side of the communication path) and session initiation can be established immediately using the optimum allowed characteristics.

In embodiment 2) where un-merged policies are sent to the UE, a similar approach is used, but with the following differences.

The S-CSCF inserts "Home Network" policies in a document (e.g. an XML document) within 2000K(REG) and includes an indication that it (the S-CSCF) is the source of the policy. The P-CSCF inserts "Access Network" policies in another document within 2000K(REG) and includes an indication that it (the P-CSCF) is the source of the policy. The UE receives the policies for the establishment of IMS sessions set at the local P-CSCF and S-CSCF as separate policies within the REGISTER procedure (2000K). Prior to initiating a session the UE merges the policies.

The policy documents may be described by the same XML schemas as in embodiment (1) - i.e. draft-ietf sipping-media-policy-dataset-04.

This method may also be used to convey other information to the UE (e.g. other types of policies for the UE).

In both embodiments (1) and (2), the UE is informed of updates of policies by means of the re-REGISTER process as described above in association with Figure 4. In embodiment (1) the updated policies are sent to the UE in a document that is merged by the P-CSCF, whereas in embodiment (2) separate policy update documents are sent and these are merged by the UE.

## Claims

1. A method of enabling user equipment to establish a communication session over an IMS network, wherein the communication session is enabled by one or more call/session control functions, CSCFs, in the network in accordance with media characteristics that define the network resources to be utilised for the session, the method comprising:
receiving within the IMS network a subscriber registration request (301) originating from the user equipment;
in response to receiving the subscriber registration request within the IMS network, sending from an S-CSCF to a P-CSCF a registration response (304) containing an indication of the allowable media characteristics based on Home Network policies applied by the S-CSCF;
at the PCSCF, receiving said registration response and merging or including (305) indications of the media characteristics based on Access Network policies with said indication of the allowable media characteristics based on Home Network policies; and
sending the registration response (306) to said user equipment containing said indications of the media characteristics based on Access Network policies and Home Network policies or an identification of the merged allowable media characteristics.

2. The method of claim 1, further comprising:
storing said identification of allowable media characteristics in a memory in the user equipment.

3. The method claim 1 or claim 2 further comprising sending a session initiation request (312) from the user equipment to the network, wherein the session initiation request includes a specification of media characteristics for the session based on said allowable media characteristics.

4. The method of any preceding claim wherein the registration request comprises a SIP REGISTER message.

5. The method of claim 4 wherein the registration response is a SIP 2000K message.

6. The method of any preceding claim, further comprising the step of sending updated allowable media characteristics (404) to the UE in response to a re-registration message (400) sent from the UE to the IMS network.

7. The method of any preceding claim wherein the identification of allowable media characteristics is inserted in a document included in said registration response.

8. The method of claim 7 wherein the document is an XML document.

9. The method of any one of the preceding claims, wherein a step of merging characteristics comprises specifying a most severe characteristics from several characteristics relating to the same property.

10. A network node for performing a proxy call/session control function, P-CSCF, in an IMS network, wherein the control function includes implementation of allowable media characteristics based on Access Network policies that define network resources provided for communications sessions, the device comprising:
means for receiving a registration response (304) from a serving call/session control function, S-CSCF, indicating allowable media characteristics based on Home Network policies, for merging or including (305) those allowable media characteristics with said allowable media characteristics based on Access Network policies, and for sending to said user equipment (306) the registration response containing said indications of the media characteristics based on Access Network policies and Home Network policies or an identification of the merged allowable media characteristics.

11. User equipment configured to participate in a communication session over an IMS network, wherein the communication session is enabled by proxy and serving call/session control functions in the network in accordance with media characteristics that define network resources to be utilised for the session, the user equipment comprising:
means for sending a registration request (301) to register with the network;
means for receiving a registration response (306) in response to the registration request, from the network, wherein the registration response contains a set of allowable media characteristics based on Access Network policies and a set of allowable media characteristics based on Home Network policies;
means for merging the two sets of media characteristics; and
means for applying the merged media characteristics to subsequent session requests.

12. The user equipment of claim 11, further comprising means for storing said merged media characteristics.

13. The user equipment claim 11 or 12, further comprising means for generating a re-registration request (401) and means for receiving information identifying updated allowable media characteristics (404) in response to the re-registration request.

14. The user equipment of any of claims 11 to 13, wherein the registration response further comprises additional information relating to other types of network policies, the user equipment storing the additional information for use in generating subsequent requests.

15. The user equipment according to any one of claims 11 to 14, said means for merging being configured to specify a most severe characteristics from several characteristics relating to the same property

## Patentansprüche

1. Verfahren, um einem Benutzergerät zu ermöglichen, eine Kommunikationssitzung über ein IMS-Netz aufzubauen, worin die Kommunikationssitzung durch eine oder mehrere Ruf/Sitzungs-Steuerfunktionen, CSCFs, im Netz gemäß Mediencharakteristiken aktiviert wird, die die für die Sitzung zu nutzenden Netzressourcen definierten, wobei das Verfahren Folgendes umfasst:
im IMS-Netz eine Teilnehmer-Registrierungsanforderung (301) empfangen, die vom Benutzergerät ausgeht;
als Reaktion auf den Empfang der Teilnehmer-Registrierungsanforderung im IMS-Netz von einer Serving-CSCF an eine Proxy-CSCF eine Registrierungsantwort (304) senden, die eine Anzeige der zulässigen Mediencharakteristiken auf der Basis von durch die S-CSCF angewendeten Heimnetz-Policies enthält;
an der P-CSCF die Registrierungsantwort empfangen und Anzeigen der Mediencharakteristiken auf der Basis von Zugangsnetz-Policies mit der Anzeige von zulässigen Mediencharakteristiken auf der Basis von Heimnetz-Policies mischen oder einschließen (305); und
die Registrierungsantwort (306), die die Anzeigen der Mediencharakteristiken auf der Basis von Zugangsnetz-Policies und Heimnetz-Policies oder einer Identifikation der vermischten zulässigen Mediencharakteristiken enthalten, an das Benutzergerät senden.

2. Verfahren nach Anspruch 1, außerdem umfassend:
Speichern der Identifikation von zulässigen Mediencharakteristiken in einem Speicher im Benutzergerät:

3. Verfahren nach Anspruch 1 oder Anspruch 2, außerdem das Senden einer Sitzungsinitiierungsanforderung (312) vom Benutzergerät an das Netz umfassend, worin die Sitzungsinitiierungsanforderung eine Spezifikation von Mediencharakteristiken für die Sitzung auf der Basis der zulässigen Mediencharakteristiken enthält.

4. Verfahren nach einem vorhergehenden Anspruch, worin die Registrierungsanforderung eine SIP-REGISTER-Nachricht umfasst.

5. Verfahren nach Anspruch 4, worin die Registrierungsantwort eine SIP-2000K-Nachricht ist.

6. Verfahren nach einem vorhergehenden Anspruch, außerdem den Schritt umfassend, aktualisiert zulässige Mediencharakteristiken (404) als Reaktion auf eine vom UE an das IMS-Netz gesendete Neuregistrierungsnachricht (400) an das UE zu senden.

7. Verfahren nach einem vorhergehenden Anspruch, worin die Identifikation von zulässigen Mediencharakteristiken in ein Dokument eingefügt wird, das in der Registrierungsantwort enthalten ist.

8. Verfahren nach Anspruch 7, worin das Dokument ein XML-Dokument ist.

9. Verfahren nach einem der vorhergehenden Ansprüche, worin ein Schritt des Mischens von Charakteristiken umfasst, dass eine schwerwiegendste Charakteristik aus mehreren Charakteristiken spezifiziert wird, die dieselbe Eigenschaft betreffen.

10. Netzknoten zum Ausführen einer Proxy-Ruf/Sitzungs-Steuerfunktion, P-CSCF, in einem IMS-Netz, worin die Steuerfunktion die Implementierung von zulässigen Mediencharakteristiken auf der Basis von Zugangsnetz-Policies enthält, die für Kommunikationssitzungen bereitgestellte Netzressourcen definieren, wobei die Einrichtung Folgendes umfasst:
Mittel zum Empfangen einer Registrierungsantwort (304) von einer Serving-Ruf/Sitzungs-Steuerfunktion, S-CSCF, die zulässige Mediencharakteristiken auf der Basis von Heimnetz-Policies anzeigt, um diese zulässigen Mediencharakteristiken mit den zulässigen Medienaharakteristiken auf der Basis von Zugangsnetz-Policies zu mischen oder einzuschließen (305), und um die Registrierungsantwort, die die Anzeigen von Charakteristiken auf der Basis von Zugangsnetz-Policies und Heimnetz-Policies oder einer Identifikation der gemischten zulässigen Mediencharakteristiken enthält, an das Benutzergerät (306) zu senden.

11. Benutzergerät, dazu konfiguriert, an einer Kommunikationssitzung über ein IMS-Netz teilzunehmen, worin die Kommunikationssitzung durch Proxy- und Serving-Ruf/Sitzungs-Steuerfunktionen im Netz gemäß Mediencharakteristiken aktiviert wird, die für die Sitzung zu nutzende Netzressourcen definieren, wobei das Benutzergerät Folgendes umfasst:
Mittel zum Senden einer Registrierungsanforderung (301), um sich beim Netz zu registrieren;
Mittel zum Empfangen einer Registrierungsantwort (306) vom Netz als Reaktion auf die Registrierungsanforderung, worin die Registrierungsantwort eine Menge von zulässigen Mediencharakteristiken auf der Basis von Zugangsnetz-Policies und eine Menge von zulässigen Mediencharakteristiken auf der Basis von Heimnetz-Policies enthält;
Mittel zum Mischen der zwei Mengen von Mediencharakteristiken; und
Mittel zum Anwenden der gemischten Mediencharakteristiken auf nachfolgende Sitzungsanforderungen.

12. Benutzergerät nach Anspruch 11, außerdem Mittel zum Speichern der gemischten Mediencharakteristiken umfassend.

13. Benutzergerät nach Anspruch 11 oder 12, außerdem Mittel zum Erzeugen einer Neuregistrierungsanforderung (401) und Mittel zum Empfangen von Information umfassend, die aktualisierte zulässige Mediencharakteristiken (404) als Antwort auf die Neuregistrierungsanforderung identifiziert.

14. Benutzergerät nach einem der Ansprüche 11 bis 13, worin die Registrierungsantwort außerdem zusätzliche Information umfasst, die andere Typen von Netz-Policies betrifft, wobei das Benutzergerät die zusätzliche Information zur Verwendung beim Erzeugen von nachfolgenden Anforderungen speichert.

15. Benutzergerät nach einem der Ansprüche 11 bis 14, wobei das Mittel zum Mischen dazu konfiguriert ist, eine schwerwiegendste Charakteristik aus mehreren Charakteristiken zu spezifizieren, die dieselbe Eigenschaft betreffen.

## Revendications

1. Procédé destiné à permettre à un équipement d'utilisateur d'établir une session de communication sur un réseau de sous-système IMS, dans lequel la session de communication est permise par une ou plusieurs fonctions de commande de session / d'appel, CSCF, dans le réseau selon des caractéristiques de support qui définissent les ressources de réseau à utiliser pour la session, le procédé comprenant les étapes ci-dessous consistant à :
recevoir, au niveau du réseau de sous-système IMS, une demande d'enregistrement d'abonné (301) provenant de l'équipement d'utilisateur ;
en réponse à la réception de la demande d'enregistrement d'abonné au niveau du réseau de sous-système IMS, envoyer, d'une fonction S-CSCF à une fonction P-CSCF, une réponse d'enregistrement (304) contenant une indication des caractéristiques de support admissibles basées sur des règles de réseau domestique appliquées par la fonction S-CSCF;
au niveau de la fonction P-CSCF, recevoir ladite réponse d'enregistrement et fusionner ou inclure (305) les indications des caractéristiques de support basées sur des règles de réseau d'accès avec/à ladite indication des caractéristiques de support admissibles basées sur des règles de réseau domestique ; et
envoyer la réponse d'enregistrement (306) audit équipement d'utilisateur contenant lesdites indications des caractéristiques de support basées sur des règles de réseau d'accès et des règles de réseau domestique ou une identification des caractéristiques de support admissibles fusionnées.

2. Procédé selon la revendication 1, comprenant en outre l'étape ci-dessous consistant à :
stocker ladite identification de caractéristiques de support admissibles dans une mémoire au sein de l'équipement d'utilisateur.

3. Procédé selon la revendication 1 ou 2, comprenant en outre l'étape consistant à envoyer une demande d'ouverture de session (312), de l'équipement d'utilisateur au réseau, dans lequel la demande d'ouverture de session comprend une spécification de caractéristiques de support pour la session, basée sur lesdites caractéristiques de support admissibles.

4. Procédé selon l'une quelconque des revendications précédentes, dans lequel la demande d'enregistrement comprend un message d'enregistrement de protocole SIP « SIP REGISTER ».

5. Procédé selon la revendication 4, dans lequel la réponse d'enregistrement est un message « SIP 2000K ».

6. Procédé selon l'une quelconque des revendications précédentes, comprenant en outre l'étape consistant à envoyer des caractéristiques de support admissibles mises à jour (404) à l'équipement UE, en réponse à un message de réenregistrement (400) envoyé de l'équipement UE au réseau de sous-système IMS.

7. Procédé selon l'une quelconque des revendications précédentes, dans lequel l'identification de caractéristiques de support admissibles est insérée dans un document inclus dans ladite réponse d'enregistrement.

8. Procédé selon la revendication 7, dans lequel le document est un document XML.

9. Procédé selon l'une quelconque des revendications précédentes, dans lequel une étape de fusion de caractéristiques comprend l'étape consistant à spécifier une caractéristique la plus rigoureuse parmi plusieurs caractéristiques relatives à la même propriété.

10. Noeud de réseau destiné à mettre en oeuvre une fonction de commande de session / d'appel de serveur mandataire, P-CSCF, dans un réseau de sous-système IMS, dans lequel la fonction de commande comprend la mise en oeuvre de caractéristiques de support admissibles basées sur des règles de réseau d'accès qui définissent des ressources de réseau fournies pour des sessions de communication, le dispositif comprenant :
un moyen pour recevoir une réponse d'enregistrement (304) d'une fonction de commande de session / d'appel de desserte, S-CSCF, indiquant des caractéristiques de support admissibles basées sur des règles de réseau domestique, pour fusionner ou inclure (305) ces caractéristiques de support admissibles avec lesdites / auxdites caractéristiques de support admissibles basées sur des règles de réseau d'accès, et pour envoyer audit équipement d'utilisateur (306) la réponse d'enregistrement contenant lesdites indications des caractéristiques de support basées sur des règles de réseau d'accès et des règles de réseau domestique, ou une identification des caractéristiques de support admissibles fusionnées.

11. Équipement d'utilisateur configuré de manière à prendre part à une session de communication sur un réseau de sous-système IMS, dans lequel la session de communication est permise par des fonctions de commande de session / d'appel de serveur mandataire ou de desserte dans le réseau, selon des caractéristiques de support qui définissent des ressources de réseau à utiliser pour la session, l'équipement d'utilisateur comprenant :
un moyen pour envoyer une demande d'enregistrement (301) en vue de s'enregistrer auprès du réseau ;
un moyen pour recevoir une réponse d'enregistrement (306) en réponse à la demande d'enregistrement, à partir du réseau, dans lequel la réponse d'enregistrement contient un ensemble de caractéristiques de support admissibles basées sur des règles de réseau d'accès et un ensemble de caractéristiques de support admissibles basées sur des règles de réseau domestique ;
un moyen pour fusionner les deux ensembles de caractéristiques de support ; et
un moyen pour appliquer les caractéristiques de support fusionnées aux demandes de session subséquentes.

12. Équipement d'utilisateur selon la revendication 11, comprenant en outre un moyen pour stocker lesdites caractéristiques de support fusionnées.

13. Équipement d'utilisateur selon la revendication 11 ou 12, comprenant en outre un moyen pour générer une demande de réenregistrement (401) et un moyen pour recevoir des informations identifiant des caractéristiques de support admissibles mises à jour (404), en réponse à la demande de réenregistrement.

14. Équipement d'utilisateur selon l'une quelconque des revendications 11 à 13, dans lequel la réponse d'enregistrement comprend en outre des informations supplémentaires relatives à d'autres types de règles de réseau, l'équipement d'utilisateur stockant les informations supplémentaires en vue de les utiliser pour la génération des demandes subséquentes.

15. Équipement d'utilisateur selon l'une quelconque des revendications 11 à 14, dans lequel ledit moyen de fusion est configuré de manière à spécifier une caractéristique la plus rigoureuse parmi plusieurs caractéristiques relatives à la même propriété.
